(19) Europäisches Patentamt
European Patent Office
Office européen des brevets

(11) **EP 3 985 459 B1**

## (12) EUROPÄISCHE PATENTSCHRIFT

(45) Veröffentlichungstag und Bekanntmachung des Hinweises auf die Patenterteilung:
**18.09.2024 Patentblatt 2024/38**

(21) Anmeldenummer: **21200027.7**

(22) Anmeldetag: **30.09.2021**

(51) Internationale Patentklassifikation (IPC):
**G05B 13/02** *(2006.01)*

(52) Gemeinsame Patentklassifikation (CPC):
**G05B 13/024; A21C 9/08;** Y02P 90/02

(54) **TEIGVERARBEITUNGSMASCHINE ZUM BEARBEITEN VON PRODUKTEN**

DOUGH PROCESSING MACHINE FOR PROCESSING PRODUCTS

MACHINE À TRAVAILLER LA PÂTE PERMETTANT DE TRAITER DES PRODUITS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2020 DE 102020126779**

(43) Veröffentlichungstag der Anmeldung:
**20.04.2022 Patentblatt 2022/16**

(73) Patentinhaber: **Fritsch Bakery Technologies GmbH & Co. KG**
**97348 Markt Einersheim (DE)**

(72) Erfinder:
• **Gebhardt, Samuel**
**97318 Kitzingen (DE)**
• **Lang, Johannes**
**97288 Theilheim (DE)**

(74) Vertreter: **Grünecker Patent- und Rechtsanwälte PartG mbB**
**Leopoldstraße 4**
**80802 München (DE)**

(56) Entgegenhaltungen:
DE-A1- 102004 038 088    DE-B3- 102014 005 998

EP 3 985 459 B1

## Beschreibung

Die vorliegende Erfindung betrifft eine Teigverarbeitungsmaschine zum Bearbeiten von Produkten in der Lebensmittelindustrie gemäß Anspruch 1 sowie ein Verfahren zum Steuern des Betriebs einer Teigverarbeitungsmaschine zum Bearbeiten von Produkten in der Lebensmittelindustrie gemäß Anspruch 9.

## Stand der Technik

Teigverarbeitungsmaschinen im Bereich der Lebensmittelindustrie sind hinreichend bekannt. Diese umfassen üblicherweise eine Vielzahl verschiedener Arbeitsstationen, wie etwa eine Transporteinrichtung für Teig und eine Formgebungseinrichtung, die aus einem in der Transporteinrichtung transportierten Teigband Rohlinge für Teigwaren formt.

Der Betrieb der verschiedenen nacheinander angeordneten Arbeitsstationen ist üblicherweise aufeinander abgestimmt. Dies dient zum einen dazu, die Produkte mit stets gleichbleibender Qualität möglichst ohne Eingriffe von Bedienern zu bearbeiten und stellt zum anderen einen reibungslosen Betrieb der gesamten Teigverarbeitungsmaschine auch über längere Zeiten sicher. Bisher können Änderungen an den Prozessbedingungen über die Einstellung von Sollwerten für Leistungsparameter einzelner Arbeitsstationen festgelegt werden.

Dies ist jedoch aufwendig, da die Leistungsparameter verschiedener Arbeitsstationen zwar voneinander abhängen können, aber nicht notwendigerweise gleich groß sind. Das macht die Einstellung der Sollwerte zum einen umständlich für den Bediener und ist zum anderen fehleranfällig. Diese Probleme werden relevanter, je komplexer die Zusammenhänge zwischen den einzelnen Arbeitsstationen sind und je mehr Arbeitsstationen vorgesehen sind.

Weiterhin zeigt etwa die DE 10 2009 017 638 die zentrale Einstellung eines Leistungs- oder Produktparameters. Basierend hierauf können zwar alle anderen Parameter der Arbeitsmaschine bestimmt werden, dies erlaubt jedoch nur eine Änderung der Prozessbedingungen insgesamt und ist damit weniger flexibel. Außerdem werden so die relativen Abläufe zwischen den Arbeitsstationen nicht beeinflusst.

Die DE 10 2004 038088 offenbart eine Vorrichtung zum Aufschuppen von Formgebäckstücken bei der die Transportgeschwindigkeit einer Zuführeinrichtung relativ zur Transportgeschwindigkeit einer Abtransporteinrichtung gewählt ist.

## Aufgabe

Ausgehend vom bekannten Stand der Technik besteht die zu lösende technische Aufgabe darin, eine Teigverarbeitungsmaschine zum Bearbeiten von Produkten in der Lebensmittelindustrie sowie ein Verfahren zur Steuerung einer solchen Teigverarbeitungsmaschine anzugeben, mit denen Prozessbedingungen beim Betrieb der Teigverarbeitungsmaschine möglichst flexibel durch einen Bediener einstellbar sind, wobei gleichzeitig die Fehleranfälligkeit bei der Veränderung von Prozessbedingungen reduziert ist.

## Lösung

Diese Aufgabe wird durch die erfindungsgemäße Teigverarbeitungsmaschine zum Bearbeiten von Produkten in der Lebensmittelindustrie gemäß Anspruch 1 und das Verfahren zum Steuern des Betriebs einer Teigverarbeitungsmaschine zum Bearbeiten von Produkten in der Lebensmittelindustrie gemäß Anspruch 9 gelöst. Vorteilhafte Weiterbildungen der Erfindung sind in den Unteransprüchen erfasst.

Die erfindungsgemäße Teigverarbeitungsmaschine zum Bearbeiten von Produkten in der Lebensmittelindustrie, umfasst wenigstens zwei entlang eines Transportweges von Produkten nacheinander angeordnete Arbeitsstationen, wobei der Betrieb der in Transportrichtung ersten Arbeitsstation von einem ersten Leistungsparameter $L_1$ und der Betrieb der in Transportrichtung zweiten Arbeitsstation von einem zweiten Leistungsparameter $L_2$ abhängt, eine Steuereinheit, die mit den Arbeitsstationen zum Einstellen der Leistungsparameter verbunden ist, und eine mit der Steuereinheit verbundene Eingabeeinrichtung, über die eine Einstellung eines Faktors $F = \frac{L_1}{L_2}$ erfolgen kann, wobei die Steuereinheit ausgebildet ist, die Leistungsparameter der ersten und der zweiten Arbeitsstation abhängig von F einzustellen und alle übrigen Faktoren $F_{nm} = \frac{L_n}{L_m}$ unverändert zu lassen, wobei $L_n$, $L_m$ Leistungsparameter von verschiedenen Arbeitsstationen n, m der Teigverarbeitungsmaschine sind.

Die Leistungsparameter $L_1$ und $L_2$ sind dabei vorteilhaft aber nicht notwendig physikalische Größen, wie etwa eine Transportgeschwindigkeit. Insbesondere können die Leistungsparameter dieselben Größen aber unterschiedliche Werte betreffen, wie etwa eine erste Transportgeschwindigkeit und eine zweite Transportgeschwindigkeit, die voneinander verschieden sind.

Durch die einmalige Vorgabe des Faktors F kann der Bediener auf einfache Weise in den Betrieb der Teigverarbeitungsmaschine an einer geeigneten Stelle eingreifen, etwa um ein Dehnen oder Strecken oder Stauchen von Teig bei einem Teigübergabepunkt zu verändern. Gleichzeitig wird durch die weitere Einstellung der Leistungsparameter bei Beibehaltung der übrigen Faktoren sichergestellt, dass die Relationen benachbarter Arbeitsstationen unverändert bleiben und der Betrieb der Teigverarbeitungsmaschine fehlerfrei fortgesetzt werden kann.

Während hier die Faktoren F bzw. $F_{nm}$ gegeben

sind über den Quotienten zweiter Leistungsparameter, soll darunter auch verstanden werden, dass die jeweiligen Faktoren gegebenenfalls aus den entsprechenden Quotienten der Leistungsparameter multipliziert mit einem Multiplikator, etwa einem Wert y, gebildet werden. In allgemeinster Form können die Faktoren $F_{nm} = \gamma \cdot L_n / L_m$ sein. Dies kann insbesondere dann der Fall sein, wenn zwar eine Abhängigkeit des Faktors von den verschiedenen Leistungsparametern $L_n$ und $L_m$ gegeben ist, die Leistungsparameter aber nicht zu denselben Größen, etwa zu denselben physikalischen Einheiten, gehören. So kann ein erster Leistungsparameter beispielsweise eine Transportgeschwindigkeit sein und ein zweiter Leistungsparameter eine ausgebrachte Menge an Produkt, beispielsweise Mehl angeben. Der Betrieb der Arbeitsstation kann dann zwar von dem Koeffizienten zwischen Transportgeschwindigkeit in der einen Arbeitsstation und ausgebrachter Mehlmenge in der anderen Arbeitsstation abhängen, es kann sich jedoch eine zusätzliche Abhängigkeit von dem Multiplikator y ergeben, der beispielsweise ein Umrechnungsverhältnis zwischen Leistungsparametern mit verschiedenen Einheiten beschreiben kann.

Für die weitere Diskussion wird y = 1 gesetzt und daher üblicherweise nicht gesondert erwähnt. Es versteht sich jedoch, dass die nachfolgenden Ausführungsformen auch unter Verwendung des Multiplikators y realisiert werden können, der damit, wenn auch nicht explizit genannt, stets als mit umfasst anzusehen ist.

Die Steuerung dahingehend, wie eine durch den Bediener an der Eingabeeinrichtung eingestellte Veränderung von $F_{ij}$ durch Anpassung der Werte $L_i$ und $L_j$ auch tatsächlich in den Arbeitsstationen umgesetzt wird, kann beispielsweise Teil einer Programmierung oder interner Vorgaben der Steuereinheit sein. Ist beispielsweise die erste Arbeitsstation weniger einfach auf Änderungen des Leistungsparameters umzustellen als die zweite Arbeitsstation, kann eine Änderung des Faktors $F_{12}$ bevorzugt durch Änderungen des Leistungsparameters $L_2$ der zweiten Arbeitsstation erfolgen. Selbiges gilt natürlich in dem umgekehrten Fall. Mit dieser Ausführungsform kann sichergestellt werden, dass die von der Einstellung des Faktors abhängigen Arbeitsabläufe ordnungsgemäß angepasst werden.

Während hier und im Folgenden von erster und zweiter Arbeitsstation die Rede ist, versteht es sich, dass dies nicht notwendig die in Transportrichtung ersten und zweiten Arbeitsstationen sind.

Die erste und zweite Arbeitsstation können irgendwo entlang der Transportrichtung angeordnet sein. Es ist lediglich vorgesehen, dass diese erste und zweite Arbeitsstation in Transportrichtung nacheinander angeordnet sind.

Allgemeiner können zwei benachbarte Arbeitsstationen i und j, mit $j = i + 1$ und $i < N, j \leq N, N \in \mathbb{N}$ gemeint sein, wobei N die Gesamtzahl der Arbeitsstationen der Teigverarbeitungsmaschine angibt.

In einer Ausführungsform ist vorgesehen, dass die Steuereinheit ausgebildet ist, wenigstens einen Leistungsparameter einer in Transportrichtung vor der ersten Arbeitsstation angeordneten Arbeitsstation abhängig von F und $L_1$ einzustellen, nachdem eine Einstellung von F erfolgt ist; und/oder wobei die Steuereinheit ausgebildet ist, wenigstens einen Leistungsparameter einer in Transportrichtung nach der zweiten Arbeitsstation angeordneten Arbeitsstation abhängig von F und $L_2$ einzustellen, nachdem eine Einstellung von F erfolgt ist.

Weiterhin kann vorgesehen sein, dass die Teigverarbeitungsmaschine eine Arbeitsstation umfasst, deren Leistungsparameter $\overline{L}$ unabhängig von den Leistungsparametern der übrigen Arbeitsstationen ist, wobei die Steuereinheit ausgebildet ist, den Leistungsparameter $\overline{L}$ nach einer Einstellung von F konstant zu belassen.

Eine solche Arbeitsstation kann beispielsweise ein Ofen sein, bei dem die Temperatur unabhängig von weiteren Leistungsparametern anderer Arbeitsstationen stets konstant bleiben muss, um beispielsweise zu verhindern, dass Teig bei zu hoher oder zu niedriger Temperatur gebacken wird. Auch die Transportgeschwindigkeit der Teigwaren durch diesen Ofen, der ein weiterer möglicher Leistungsparameter im Sinne dieser Ausführungsform sein kann, muss üblicherweise konstant gehalten werden, da die Verweildauer der Teigwaren im Ofen üblicherweise ebenfalls unabhängig von einer Veränderung etwa der Transportgeschwindigkeit der Teigwaren in Arbeitsstationen vor dem Ofen oder nach dem Ofen ist. Mit dieser Ausführungsform wird solch spezifischen Anforderungen an Leistungsparameter bestimmter Arbeitsstationen Rechnung getragen.

In einer Ausführungsform ist eine Arbeitsstation als Vorgabestation ausgebildet und die Eingabeeinrichtung ist zum Einstellen eines Leistungsparameters $L_{Vorgabe}$ ausgebildet und die Steuereinheit ist ausgebildet, alle Leistungsparameter aller Arbeitsstationen abhängig von $L_{Vorgabe}$ einzustellen.

Die Vorgabestation kann auch als "Master-Station" bezeichnet werden und als Vorgabe für sämtliche andere Arbeitsstationen oder zumindest eine Gruppe von Arbeitsstationen dienen. Wird etwa die Transportgeschwindigkeit als Leistungsparameter $L_{Vorgabe}$ der Vorgabestation erhöht, kann dies benutzt werden, um sämtliche Leistungsparameter entsprechend zu erhöhen. Davon ausgeschlossen sein können die unabhängig von den übrigen Leistungsparametern der Arbeitsstationen stets konstanten Leistungsparameter $\overline{L}$. Diese Ausführungsform erlaubt eine einfache Einstellung sämtlicher Leistungsparameter aller Arbeitsstationen.

In einer Weiterbildung dieser Ausführungsform können die Leistungsparameter aller Arbeitsstationen abhängig von den Faktoren $F_{nm} = \dfrac{L_n}{L_m}$ und von $L_{Vorgabe}$ so von der Steuereinheit eingestellt werden, dass alle $F_{nm}$ konstant bleiben.

Dies kann etwa dadurch erreicht werden, dass jeder der Leistungsparameter $L_n$ und $L_m$ abhängig vom Verhältnis zwischen dem neuen Leistungsparameter $L_{Vorgabe}$ und dem alten Leistungsparameter $L_{Vorgabe, alt}$ eingestellt wird. Wird jeder Leistungsparameter $L_n$, $L_m$ mit diesem Wert multipliziert, ändern sich die Faktoren $F_{nm}$ dadurch nicht, sodass die relativen Verhältnisse zwischen benachbarten Arbeitsstationen trotz veränderter Leistungsparameter beibehalten werden können, was eine einfache Einstellung der Arbeitsstationen der Teigverarbeitungsmaschine ermöglicht.

In einer Ausführungsform sind die Leistungsparameter Transportgeschwindigkeiten. Transportgeschwindigkeiten als ein möglicher Leistungsparameter werden in Betrieb häufig verändert, weshalb deren einfache Einstellung die Bedienung der Teigverarbeitungsmaschine verbessern kann.

Ferner kann wenigstens eine der Arbeitsstationen eine Transporteinrichtung zum Transportieren von Produkten sein oder diese umfassen und/oder wenigstens eine der Arbeitsstationen kann eine Bearbeitungsstation zum Bearbeiten von Produkten oder diese umfassen.

Unter dem Begriff der Bearbeitungsstation wird jede Station verstanden, die nicht ausschließlich einen Transport der Produkte vornimmt, sondern gegebenenfalls zusätzlich zu dem Transport oder ohne Transport der Produkte eine Handlung an den Produkten vornimmt. Dazu zählt insbesondere bei Teigwaren beispielsweise das Mischen von Teig, das Backen von Teig, das Formen von Teig, das Aufbringen weiterer Elemente auf eine Teigportion, das Zerteilen der Teigportionen, ein Wickeln einer Teigportion oder Ähnliches. Obige beispielhafte Ausführungsformen sind nicht beschränkend zu verstehen und sämtliche andere Arten von Bearbeitungsstationen sind hier denkbar.

In einer Ausführungsform ist die Steuereinheit ausgebildet, eine Einstellung eines Faktors basierend auf einem zulässigen Leistungsparameter-Bereich zu prüfen und abhängig von einem Ergebnis der Prüfung die Einstellung des Faktors vorzunehmen oder zu verweigern.

So kann beispielsweise für alle oder für jeden Leistungsparameter gesondert oder auch nur für einen Teil der Leistungsparameter ein zulässiger Leistungsparameter-Bereich, etwa einen Wertebereich, in der Steuereinheit hinterlegt sein oder dieser zugänglich sein. Bewirkt die Einstellung des Faktors durch den Bediener dann eine Überschreitung des erlaubten Leistungsparameter-Bereichs, kann die Steuereinheit ausgebildet sein, die Änderungen des Faktors abzulehnen oder zu verweigern. Dabei kann vorgesehen sein, dass die Einstellung des Faktors nicht alleine anhand der Leistungsparameter bzw. der für diesen Faktor relevanten Leistungsparameter zulässigen Leistungsparameter-Bereiche geprüft wird, sondern jede Änderung eines Leistungsparameters, die diese Änderung des Faktors bewirken wird, zunächst hinsichtlich der Verträglichkeit mit einem dem Leistungsparameter zugeordneten Leistungsparameter-Bereich geprüft wird. Es kann vorgesehen sein, dass erst wenn die Steuereinheit feststellt, dass die Änderung des Faktors für die Einstellung sämtlicher Leistungsparameter nicht aus dem jeweiligen Leistungsparameter-Bereich hinausführt, die Einstellung des Faktors von der Steuereinheit akzeptiert wird.

Das erfindungsgemäße Verfahren zum Steuern des Betriebs einer Teigverarbeitungsmaschine zum Bearbeiten von Produkten in der Lebensmittelindustrie, die Teigverarbeitungsmaschine umfassend wenigstens zwei entlang eines Transportweges von Produkten nacheinander angeordnete Arbeitsstationen, wobei der Betrieb der in Transportrichtung ersten Arbeitsstation von einem ersten Leistungsparameter $L_1$ und der Betrieb der in Transportrichtung zweiten Arbeitsstation von einem zweiten Leistungsparameter $L_2$ abhängt, eine Steuereinheit, die mit den Arbeitsstationen zum Einstellen der Leistungsparameter verbunden ist, und eine mit der Steuereinheit verbundene Eingabeeinrichtung, umfasst eine Einstellung des Faktors $F = \frac{L_1}{L_2}$ mittels der Eingabeeinrichtung und ein Einstellen der Leistungsparameter der ersten und der zweiten Arbeitsstation abhängig von der Einstellung von L durch die Steuereinheit, wobei die Steuereinheit alle übrigen Faktoren $F_{nm} = \frac{L_n}{L_m}$ unverändert lässt, wobei $L_n$, $L_m$ Leistungsparameter von verschiedenen Arbeitsstationen n, m der Teigverarbeitungsmaschine sind.

In diesem Verfahren ist für den Bediener eine vereinfachte Steuerung und Änderung der Leistungsparameter einer Teigverarbeitungsmaschine möglich.

Es kann vorgesehen sein, dass die Steuereinheit wenigstens einen Leistungsparameter einer in Transportrichtung vor der ersten Arbeitsstation angeordneten Arbeitsstation abhängig von F und $L_1$ einstellt, nachdem eine Einstellung von F erfolgt ist; und/oder wobei die Steuereinheit wenigstens einen Leistungsparameter einer in Transportrichtung nach der zweiten Arbeitsstation angeordneten Arbeitsstation abhängig von F und $L_2$ einstellt, nachdem eine Einstellung von F erfolgt ist. Abhängig von der Änderung von F und gegebenenfalls abhängig von zusätzlichen Informationen kann so entweder der Prozessablauf vor dem Paar von Arbeitsstationen, für die der Faktor eingestellt wird, beeinflusst werden, oder nach diesem Paar von Arbeitsstationen. Dies kann abhängig von den auszuführenden Prozessen vorteilhaft sein.

Ferner kann die Teigverarbeitungsmaschine eine Arbeitsstation umfassen, deren Leistungsparameter $\bar{L}$ unabhängig von den Leistungsparametern der übrigen Arbeitsstationen ist, wobei die Steuereinheit den Leistungsparameter $\bar{L}$ nach einer Einstellung von F konstant lässt. Hiermit können Prozesse, deren Leistungsparameter konstant gehalten werden müssen (wie etwa die Verweildauer oder die Temperatur innerhalb eines Ofens) von der Anpassung der Faktoren ausgenommen werden.

Es kann auch vorgesehen sein, dass weiterhin eine Arbeitsstation als Vorgabestation ausgebildet ist und die Eingabeeinrichtung eine Eingabe zur Einstellung eines Leistungsparameters $L_{Vorgabe}$ empfängt und die Steuereinheit alle Leistungsparameter aller Arbeitsstationen abhängig von $L_{Vorgabe}$ einstellt. Durch Verwendung einer solchen Vorgabestation, die auch als "Master-Station" bezeichnet werden kann, kann das Erhöhen oder Verringern sämtlicher Leistungsparameter realisiert werden, wobei lediglich das Einstellen des Leistungsparameters einer einzigen Arbeitsstation, nämlich der Vorgabestation, notwendig ist.

In einer Weiterbildung dieser Ausführungsform werden die Leistungsparameter aller Arbeitsstationen

$$F_{nm} = \frac{L_n}{L_m}$$

abhängig von den Faktoren und von $L_{Vorgabe}$ so von der Steuereinheit eingestellt, dass alle Faktoren $F_{nm}$ konstant bleiben. Hiermit wird sichergestellt, dass die relativen Verhältnisse benachbarter Arbeitsstationen zueinander durch die Einstellung der Vorgabestationen nicht unbeabsichtigt beeinflusst werden.

Es kann weiterhin vorgesehen sein, dass die Leistungsparameter Transportgeschwindigkeiten sind. Für Transportgeschwindigkeiten ist die Einstellung der jeweiligen Faktoren besonders vorteilhaft.

In einer weiteren Ausführungsform ist vorgesehen, dass die Steuereinheit eine Einstellung eines Faktors basierend auf einem zulässigen Leistungsparameter-Bereich prüft und abhängig von einem Ergebnis der Prüfung die Einstellung des Faktors vornimmt oder verweigert.

Diese Prüfung muss nicht nur an den oder für die unmittelbar an der Einstellung des Faktors beteiligten Leistungsparametern, etwa den Leistungsparametern $L_1$ und $L_2$ durchgeführt werden, sondern kann auch an allen übrigen Leistungsparametern, die durch das Einstellen dieses Faktors beeinflusst werden können, ausgeführt werden, und nur wenn diese Prüfung ergibt, dass die Einstellung der Leistungsparameter für jeden Leistungsparameter zu einer Einstellung innerhalb des zulässigen Leistungsparameter-Bereichs führt, die Einstellung des Faktors vorgenommen werden.

## Kurze Beschreibung der Figuren

Fig. 1 zeigt eine schematische Ansicht einer Teigverarbeitungsmaschine gemäß einer Ausführungsform;

Fig. 2 zeigt ein Fließschema eines Verfahrens gemäß einer Ausführungsform;

Fig. 3 zeigt ein Fließschema gemäß einer weiteren Ausführungsform.

## Ausführliche Beschreibung

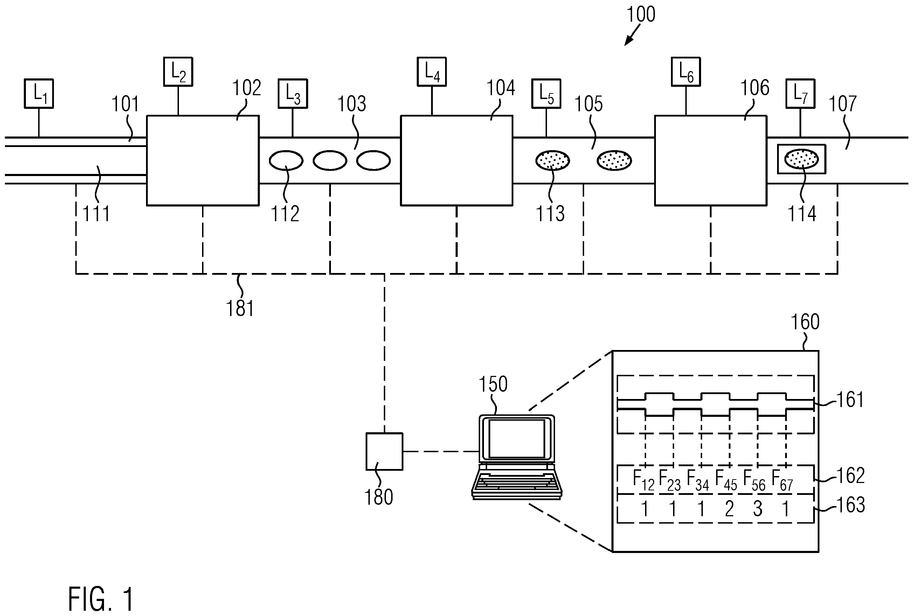

Fig. 1 zeigt eine Ausführungsform einer Teigverarbeitungsmaschine 100 zum Bearbeiten von Produkten. Diese Teigverarbeitungsmaschine kann eine Teigverarbeitungsmaschine in der Lebensmittelindustrie und umfasst üblicherweise eine Vielzahl von Arbeitsstationen 101 bis 107. Unter dem Begriff der Arbeitsstation soll grundsätzlich jede Einrichtung verstanden werden, die eine Handlung an oder in Bezug auf Produkte, insbesondere Teig und/oder dessen Zutaten vornimmt. Unter dem allgemeinen Begriff der Arbeitsstation fallen somit nicht nur solche Arbeitsstationen, die eine (physische) Veränderung an Produkten vornehmen, sondern der Begriff der Arbeitsstation soll auch etwa als Transporteinrichtungen und/oder Inspektionseinrichtungen für die Produkte umfassend verstanden werden. Arbeitsstationen, die eine (physische) Veränderung an den Produkten vornehmen, können auch als "Bearbeitungsstationen" bezeichnet werden.

In diesem Sinne zeigt die Fig. 1 Arbeitsstationen 101, 103, 105 sowie 107, die als Transporteinrichtungen für die Produkte 111, 112, 113 und 114 ausgebildet sind. Die Transporteinrichtungen können beispielsweise in Form von Transportbändern oder Transportketten oder Halterungen zum Halten von Produkten und Transportieren dieser Produkte entlang einer Transportstrecke ausgebildet sein. Die Erfindung ist diesbezüglich nicht beschränkt.

Weiterhin sind in der Fig. 1 die Arbeitsstationen 102, 104 und 106 dargestellt. Diese Arbeitsstationen sind in der dargestellten Ausführungsform als solche Arbeitsstationen ausgebildet, die eine tatsächliche (physische) Bearbeitung von Produkten durchführen.

In der beispielhaften Ausführungsform der Fig. 1 ist etwa ein Teigstreifen 111 gezeigt, der zunächst der Arbeitsstation 102 mittels der Transporteinrichtung 101 zugeführt wird. Dieser Teigstreifen 111 kann bevorzugt ein "Endlos"-Teigstreifen sein, der ohne Unterbrechung der Arbeitsstation 102 zugeführt werden kann. In dieser Arbeitsstation können aus dem Teigstreifen 111 einzelne Teigstücke oder Teigportionen gebildet werden, sodass danach eine Reihe von Teigportionen oder Teigstücken 112 mit der Transporteinrichtung 103 zu der nachgeschalteten Arbeitsstation 104 transportiert werden können. In dieser Arbeitsstation können die Teigportionen 112 beispielsweise mit einem Belag versehen werden, sodass belegte Teigportionen 113 die Arbeitsstation 104 verlassen und über die Transporteinrichtung 105 der weiteren Arbeitsstation 106 zugeführt werden. Die Arbeitsstation 106 kann beispielsweise eine Verpackungsmaschine sein, die die einzelnen belegten Teigportionen verpackt, sodass verpackte Endprodukte 114 ausgegeben und etwa über die Transporteinrichtung 107 weitertransportiert werden können. Anstelle einer Verpackungsmaschine kann hier aber auch etwa ein Ofen vorgesehen sein, der die belegten Teigportionen backen kann. Alternativ oder zusätzlich kann auch ein Froster vorgesehen sein, der die Produkte einfrieren kann. Die Arbeitsstation 106 ist diesbezüglich nicht beschränkt.

Dieser Ablauf ist lediglich beispielhaft zu verstehen und kann auch anders realisiert werden. Grundsätzlich können sämtliche in der Lebensmittelindustrie bekannte Arbeitsstationen und hier im Besonderen sämtliche bekannten Transporteinrichtungen und/oder Bearbeitungsstationen implementiert werden.

In der in Fig. 1 dargestellten Ausführungsform ist jeder der Arbeitsstationen 101 bis 107 zumindest ein Leistungsparameter $L_1$ bis $L_7$ zugeordnet. Die Leistungsparameter sind solche Größen, von denen der Betrieb der jeweiligen Arbeitsstation abhängt. Die Leistungsparameter können beispielsweise physikalische Größen sein. Am Beispiel der Transporteinrichtungen 101, 103, 105 und 107 kann es sich bei den zugehörigen Leistungsparametern beispielsweise um eine Transportgeschwindigkeit handeln. Analog kann auch für die Arbeitsstationen 102, 104 und 106 ein Leistungsparameter vorgesehen sein, der den Transport der einzelnen Produkte durch diese Arbeitsstationen spezifiziert, etwa ebenfalls eine Transportgeschwindigkeit.

Die Leistungsparameter sind jedoch nicht auf eine Transportgeschwindigkeit beschränkt. Auch andere Leistungsparameter, etwa ein Durchsatz (Anzahl der Produkte pro Zeiteinheit, etwa pro Stunde) oder eine auszugebende Produktmenge pro Zeiteinheit oder Ähnliches können als Leistungsparameter dienen.

Grundsätzlich kann vorgesehen sein, dass die Leistungsparameter $L_1$ bis $L_7$ über einen diskreten oder (kontinuierlichen) Leistungsparameter-Bereich variabel einstellbar sind, sodass sie je nach Notwendigkeit beim Betrieb der Teigverarbeitungsmaschine 100 verändert werden können. Es kann jedoch auch vorgesehen sein, dass einer oder mehrere Leistungsparameter nicht verändert werden können. Dies kann etwa bei einer Temperatur und/oder Verweildauer von Produkten in einem Ofen der Fall sein. Solche von den übrigen Leistungsparametern unabhängige und vorgegebene und konstante Leistungsparameter $\bar{L}$ werden bei etwaigen Veränderungen anderer Leistungsparameter konstant gehalten.

Die Teigverarbeitungsmaschine umfasst weiterhin eine Steuereinheit 180, die mit den Arbeitsstationen 101 bis 107 zum Zwecke des Datenaustausches über entsprechende Datenverbindungen 181 verbunden sein kann. Diese Datenverbindungen 181 können etwa in Form von Kabeln (oder allgemeinen physischen Verbindungen) oder drahtlos, etwa über WLAN, realisiert werden. Die Steuereinheit 180 kann als im Bereich der Teigverarbeitungsmaschinen bekannte Steuereinheit 180 ausgebildet sein, etwa als Computer oder Server oder Ähnliches. Sie kann über geeignete Programmierung verfügen, um den Betrieb der einzelnen Arbeitsstationen zu überwachen und/oder zu steuern.

Die Datenverbindungen 181 können bevorzugt bidirektional ausgestaltet sein, sodass eine Rückmeldung von den Arbeitsstationen an die Steuereinheit und eine Übermittlung von Daten von der Steuereinheit 180 an die einzelnen Arbeitsstationen möglich ist.

In der Fig. 1 ist weiterhin eine Eingabeeinrichtung 150 gezeigt. Diese ist hier als Laptop dargestellt, kann aber auch auf andere Weise realisiert werden. Insbesondere kann die Eingabeeinrichtung in einer Ausführungsform als Bedienterminal der Anlage ausgestaltet sein oder ein solches umfassen. Grundsätzlich muss die Eingabeeinrichtung lediglich dazu ausgebildet sein, Nutzerbefehle bzw. Nutzereingaben entgegennehmen zu können und diese an die Steuereinheit zu übermitteln. Die Eingabeeinrichtung kann weiterhin über ein Display 160 verfügen. Auf diesem Display können Informationen über den Betrieb der Teigverarbeitungsmaschine angezeigt werden.

In der hier beschriebenen Ausführungsform ist insbesondere vorgesehen, dass benachbarte Arbeitsstationen, wie etwa die Arbeitsstation 101 und die Arbeitsstation 102, miteinander über einen Faktor $F_{12}$ gekoppelt sind. Dies bedeutet, dass die Leistungsparameter $L_1$ und $L_2$ im Verhältnis von $\frac{L_1}{L_2} = F_{12}$ miteinander verknüpft sind, sodass der Betrieb der Arbeitsstation 101 mit dem Betrieb der Arbeitsstation 102 über den Faktor $F_{12}$ zusammenhängt. Dasselbe gilt für die übrigen Paare von Arbeitsstationen, also etwa auch die Arbeitsstation 102 und die Arbeitsstation 103, die über einen entsprechenden Faktor (hier der $F_{23}$) miteinander zusammenhängen.

Auf dem Display 160 kann zu diesem Zweck für die Veranschaulichung des Betriebs der Teigverarbeitungsmaschine an den Benutzer eine schematische Darstellung 161 der Teigverarbeitungsmaschine mit den dazugehörigen Arbeitsstationen gezeigt werden. Ebenso kann im Bereich 162 eine Darstellung der entsprechenden Faktoren $F_{ij}$ (wobei i und j jeweils für die Nummer der Arbeitsstation stehen) eingeblendet werden. Gleichzeitig kann etwa über eine optische Darstellung, wie eine Klammer, dargestellt werden, welcher der Faktoren sich auf die Zusammenarbeit welcher Arbeitsstationen bezieht, sodass für den Bediener etwa eine Zuordnung des Faktors $F_{12}$ zu den Arbeitsstationen 101 und 102 möglich wird. Die Nummerierung der Arbeitsstationen ist hier fortlaufend gewählt. Es sind jedoch auch andere Bezeichnungen denkbar. Die Erfindung ist diesbezüglich auch nicht beschränkt.

Überdies kann vorgesehen sein, dass in einem weiteren Bereich 163 der jeweilige Wert der Faktoren gezeigt ist. Die hier dargestellten Zahlenwerte für die Faktoren ($F_{12} = 1$, $F_{23} = 1$, $F_{34} = 1$, $F_{45} = 2$, $F_{56} = 3$, $F_{67} = 1$) sind nur beispielhaft und dienen lediglich der Veranschaulichung, sind also nicht beschränkend. Hierdurch wird dem Bediener eine vereinfachte Übersicht über die Beziehungen zwischen benachbarten Arbeitsstationen gegeben.

Erfindungsgemäß ist nun vorgesehen, dass eine Eingabe des Bedieners zur Einstellung wenigstens eines der Faktoren über die Eingabeeinrichtung 160 erfolgen kann. Beispielsweise kann eine Einstellung des Faktors $F_{34}$ erfolgen, wobei der Faktor $F_{34}$ entweder vergrößert oder verkleinert wird. Beispielsweise kann der Faktor $F_{34}$ vom gegenwärtigen Wert 1 von einem Bediener durch eine entsprechende Eingabe auf den Wert 2 festgelegt werden.

Da $F_{34} = L_3 / L_4$ ist, erfordert diese neue Festlegung des Faktors $F_{34}$ eine Änderung der Leistungsparameter. Die Erhöhung des Faktors kann etwa dadurch in dem Betrieb der Teigverarbeitungsmaschine umgesetzt werden, dass der Leistungsparameter $L_3$ um den Faktor 2 erhöht wird oder der Leistungsparameter $L_4$ um den Faktor 2 verringert wird. Hier kann vorgesehen sein, dass bei einer Eingabe eines Benutzers, die eine Erhöhung eines Faktors bewirkt, stets der Leistungsparameter im Zähler des Quotienten um den entsprechenden Faktor vergrößert wird. Wird der Faktor verringert, kann vorgesehen sein, dass der Leistungsparameter im Nenner um den entsprechenden Faktor vergrößert wird. Auch andere Kombinationen sind hier denkbar.

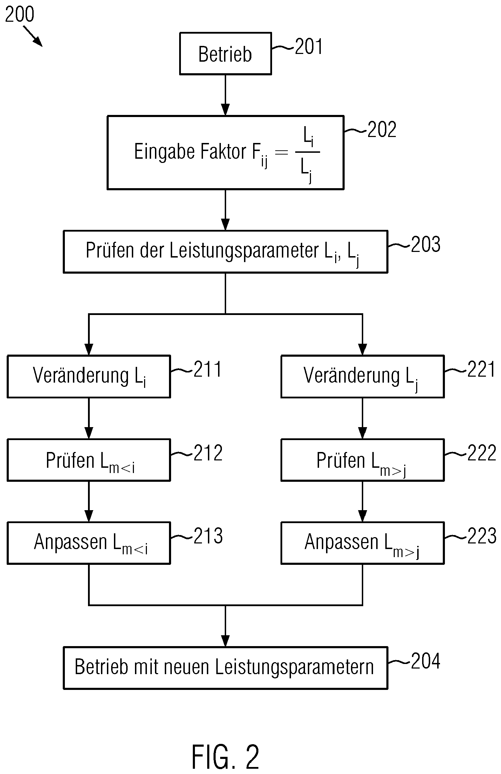

Nach einer solchen Eingabe ist dann vorgesehen, dass die Steuereinheit die übrigen Leistungsparameter falls notwendig derart anpasst, dass die übrigen Faktoren $F_{nm}$ unverändert bleiben. Dies wird genauer in Fig. 2 beschrieben.

Fig. 2 zeigt ein Fließschema eines Verfahrens zum Einstellen eines Faktors und darauffolgendes Umstellen des Betriebs der Teigverarbeitungsmaschine gemäß einer Ausführungsform.

Wie mit Bezug auf Fig. 1 beschrieben, kann ein Bediener grundsätzlich einen veränderten Faktor $F_{ij}$ über die Eingabeeinrichtung eingeben, der dann von der Steuereinheit verwendet wird, um gegebenenfalls die übrigen Leistungsparameter anzupassen. Die Fig. 2 beschreibt nun eine Ausführungsform, wie dies erfolgen kann.

Das Verfahren 200 in Fig. 2 beginnt zunächst mit dem Betrieb 201 der Teigverarbeitungsmaschine mit den gegebenen Leistungsparametern und Faktoren. Diese können beliebige, gegebenenfalls voreingestellte Werte aufweisen.

Zu einem beliebigen Zeitpunkt erfolgt dann im Schritt 202 eine Eingabe eines Bedieners in der Eingabeeinrichtung 150, mit der ein neuer Faktor $F_{ij} = L_i / L_j$ festgelegt wird. Der Faktor kann beispielsweise vergrößert oder verkleinert werden. Grundsätzlich kann eine Eingabe eines Bedieners derart erfolgen, dass entweder ein Multiplikator vorgegeben wird, mit dem der ursprüngliche Faktor $F_{ij}$ zu multiplizieren ist, oder dass ein neuer Wert für den Faktor $F_{ij}$ eingegeben wird. Sowohl der Multiplikator als auch der neue Faktor können in einer bevorzugten Ausführungsform beliebige reelle Zahlen größer als Null annehmen. Es sind jedoch auch Ausführungsformen denkbar, bei denen der Multiplikator und/oder der Faktor (und/oder einer oder beide Leistungsparameter) negative Werte annehmen können.

In einem nachfolgenden, optionalen Schritt kann nun im Schritt 203 geprüft werden, ob die Veränderung des Faktors $F_{ij}$ dazu führen wird, dass zumindest einer der Leistungsparameter $L_i$ oder $L_j$ der jeweiligen Arbeitsstation derart verändert werden muss, dass sein Wert außerhalb eines für die jeweilige Arbeitsstation zulässigen Leistungsparameter-Bereichs liegt.

Beispielsweise kann eine Veränderung des Faktors $F_{ij}$ erfolgen, die diesen Faktor verdoppelt. Dies bedeutet, dass entweder der Leistungsparameter $L_i$ verdoppelt werden muss oder der Leistungsparameter $L_j$ halbiert werden muss oder eine Veränderung der Leistungsparameter zwischen diesen Wertebereichen erreicht wird. Ist nun der Leistungsparameter $L_i$ bereits an der oberen Grenze eines für die betreffende Arbeitsstation zulässigen Leistungsparameter-Bereichs eingestellt, so ist eine Vergrößerung des Leistungsparameters $L_i$ zum Realisieren der Einstellung des neuen Faktors $F_{ij}$ nicht zulässig und kann von der Steuereinheit ausgeschlossen bzw. abgelehnt werden. Ist in einem solchen Fall gleichzeitig der Wert des Leistungsparameters $L_j$ an der unteren Grenze des Leistungsparameter-Bereichs der dazu gehörigen Arbeitsstation, so scheitert auch eine entsprechende Anpassung des Leistungsparameters $L_j$ aus, womit eine Umsetzung des neu eingegebenen Faktors $F_{ij}$ nicht möglich ist. In einem solchen Fall kann die Prüfung im Schritt 203 ergeben, dass die Eingabe des Bedieners für den neuen Faktor $F_{ij}$ zurückgewiesen wird und die Einstellung des Faktors und die damit verbundene Einstellung der Leistungsparameter nicht vorgenommen wird bzw. von der Steuereinheit 180 verweigert wird.

In einem dazu alternativen Fall kann die Situation eintreten, bei dem eine Einstellung des Leistungsparameters $L_i$ zwar nicht möglich ist (wie eben erläutert) eine Einstellung des Parameters $L_j$ aber immer noch innerhalb des zulässigen Leistungsparameter-Bereichs für diesen Leistungsparameter derart möglich ist, dass die Eingabe des Faktors $F_{ij}$ durch Einstellung des Leistungsparameters $L_j$ realisiert werden kann. In einem solchen Fall kann die Prüfung dann ergeben, dass zwar eine weitere Veränderung oder Vergrößerung des Leistungsparameters $L_i$ nicht möglich ist, jedoch eine Einstellung des Leistungsparameters $L_j$ erfolgen kann, womit dann der neu eingestellte Faktor $F_{ij}$ erreicht wird. Auch der umgekehrte Fall ist denkbar.

Es sei hier erwähnt, dass die jeweiligen Leistungsparameter-Bereiche für die Leistungsparameter $L_i$ und $L_j$ nicht identisch sein müssen. Da es sich bei den Leistungsparametern $L_i$ und $L_j$ um zu unterschiedlichen Arbeitsstationen gehörende Leistungsparameter handelt, können unterschiedliche Leistungsparameter-Bereiche vorgegeben sein. Die Leistungsparameter-Bereiche oder zumindest einer der Leistungsparameter-Bereiche muss auch nicht ein durchgängiges Intervall von Zahlen enthalten, sondern kann auch auf bestimmte Teilbereiche beschränkt sein. Dies ändert nichts am Vorgehen der Prüfung der Leistungsparameter hinsichtlich ihrer Einstellungen zum Realisieren des neu eingestellten Faktors $F_{ij}$.

Optional abhängig von dem Ergebnis der Prüfungen und/oder je nach Voreinstellung kann in dem nächsten Schritt dann eine Einstellung des Leistungsparameters $L_i$ im Schritt 211 oder eine Einstellung des Leistungsparameters $L_j$ im Schritt 221 derart erfolgen, dass der neu eingestellte Faktor $F_{ij}$ für die Arbeitsstationen i und j erreicht wird.

Grundsätzlich ist die Vorgehensweise, mit der der neue Faktor $F_{ij}$ auf die Leistungsparameter $L_i$ und $L_j$ umgesetzt wird, beliebig. Es kann sich jedoch als vorteilhaft erweisen, bei einer Erhöhung des Faktors $F_{ij}$ von seinem gegenwärtigen Wert bevorzugt (etwa bis auf ein dies nicht zulassendes Resultat während der Prüfung im Schritt 203) den Leistungsparameter $L_i$ entsprechend zu vergrö-ßern. Wird der Faktor $F_{ij}$ indes verringert, kann bevorzugt sein, dass im Schritt 221 eine entsprechende Veränderung des Leistungsparameters $L_j$ erfolgt, um die Verringerung des Faktors $F_{ij}$ zu realisieren.

Dies hat unterschiedliche Konsequenzen für die weiteren Leistungsparameter der übrigen Arbeitsstationen.

Wird beispielsweise der Leistungsparameter $L_i$ abhängig von dem Faktor $F_{ij}$ eingestellt und der Leistungsparameter $L_j$ konstant gelassen, so kann es für den ordnungsgemäßen Betrieb der gesamten Teigverarbeitungsmaschine erforderlich sein, dass die entsprechenden Leistungsfaktoren mit einem Index m < i angepasst werden, sodass die jeweiligen Faktoren $F_{mr}$ (für m, n < i) konstant gehalten werden und deren Betrieb zumindest im relativen Verhältnis zueinander wie vor der Einstellung des Faktors fortgesetzt werden kann.

Dies kann umfassen, dass in einem nachfolgenden Schritt nach der Feststellung, dass der Leistungsparameter $L_i$ verändert werden soll, die Leistungsparameter $L_{mci}$ im Schritt 212 hinsichtlich ihrer Anpassung überprüft werden.

In einer Ausführungsform kann dies erfolgen, indem zunächst der Faktor $F_{i-1,i} = \dfrac{L_{i-1}}{L_i}$ konstant gehalten wird und die notwendige Veränderung des Leistungsparameters $L_{i-1}$ basierend auf der bereits bestimmten Veränderung des Leistungsparameters $L_i$ und dem Faktor $F_{i-1,i}$ bestimmt wird, wobei $F_{i-1,i}$ konstant gehalten wird. Liegt der neue Leistungsparameter $L_{i-1}$ in einem für diesen Leistungsparameter zulässigen Leistungsparameter-Bereich (siehe hierzu die Beschreibung zu Schritt 203), so kann von der Steuereinheit festgestellt werden, dass eine Anpassung dieses Leistungsparameters $L_{i-1}$ zulässig ist. Dies kann dann für den nächsten Leistungsparameter $L_{i-2}$ basierend auf dem dazugehörigen Faktor $F_{i-2,i-1} = \dfrac{L_{i-2}}{L_{i-1}}$ erneut durchgeführt werden, bis sämtliche in Transportrichtung der Produkte vor der Arbeitsstation i liegenden Leistungsparameter geprüft wurden. In einer besonders bevorzugten Ausführungsform kann vorgesehen sein, dass, nur wenn die Prüfung für alle dieser Leistungsparametern $L_{m<i}$ ergibt, dass diese innerhalb ihres jeweils zulässigen Leistungsparameter-Bereichs geändert werden, eine Anpassung der Leistungsparameter erfolgt. Dies erfolgt dann im Schritt 213, woraufhin im Schritt 204 der Betrieb mit den neuen Leistungsparametern fortgesetzt werden kann.

Wird alternativ dazu eine Veränderung des Leistungsparameters $L_j$ von der Steuereinheit bestimmt, so kann im Schritt 222 eine Prüfung der Leistungsparameter $L_{m>j}$ analog zum Schritt 212 erfolgen. Dabei kann dann zunächst basierend auf der unmittelbar folgenden Arbeitsstation und dem dazugehörigen Leistungsparameter $L_{j+1}$ und basierend auf dem Faktor $\dfrac{L_j}{L_{j+1}} = F_{j,j+1}$ geprüft, ob der Leistungsparameter $L_{j+1}$ bei Konstanthalten des Faktors $F_{j,j+1}$ innerhalb des für ihn zulässigen Leistungsparameter-Bereichs geändert werden kann. Dies kann dann sukzessive für die übrigen Leistungsparameter $L_{m>j}$ durchgeführt werden und, analog zum Schritt 213, kann, nur wenn die Prüfung sämtlicher Leistungsparameter $L_{m>j}$ ergibt, dass eine Anpassung der Leistungsparameter in ihrem zulässigen Leistungsparameter-Bereich möglich ist, eine Anpassung sämtlicher Leistungsparameter $L_{m>j}$ erfolgen, woraufhin analog im Schritt 204 der Betrieb mit den neuen Leistungsparametern fortgesetzt werden kann.

In der oben beschrieben Ausführungsform wurden zur vereinfachten Beschreibung sämtliche Leistungsparameter $L_k$ als basierend auf der Einstellung des Faktor $F_{ij}$ veränderbar angesehen. Wie bereits mit Bezug auf Fig. 1 beschrieben, kann es jedoch Leistungsparameter $\bar{L}$ geben, die während des Betriebs der Teigverarbeitungsmaschine stets konstant gehalten werden müssen, wie etwa die Temperatur in einem Ofen oder die Verweildauer von Produkten in einem Ofen und damit auch die Transportgeschwindigkeit der Produkte durch den Ofen. Diese Leistungsparameter können bei der Beurteilung im Verfahren gemäß der Fig. 2 unberücksichtigt bleiben, da sie ohnehin nicht verändert werden.

Solche konstant gehaltenen Leistungsparameter können dazu führen, dass eine Anpassung von Leistungsparametern ausgehend von einer Umstellung eines Faktors $F_{ij}$ nur bis zu der Arbeitsstation erfolgt, für die der Leistungsparameter konstant bleiben muss. Alle nachfolgenden Arbeitsstationen oder alle dieser vorausgehenden Arbeitsstationen können dann gegebenenfalls von der Einstellung des Faktors $F_{ij}$ nicht betroffen sein. Dies ist jedoch nicht zwingend.

Während die Beschreibung der Fig. 2 die Einstellung der Leistungsparameter ausgehend von einer Veränderung eines Faktors $F_{ij}$ bei Beibehaltung sämtli-

cher Faktoren beschreibt, kann eine zusätzliche Eingabemöglichkeit für den Bediener vorgesehen sein, die die Einstellung des Betriebs der Teigverarbeitungsmaschine verändern kann.

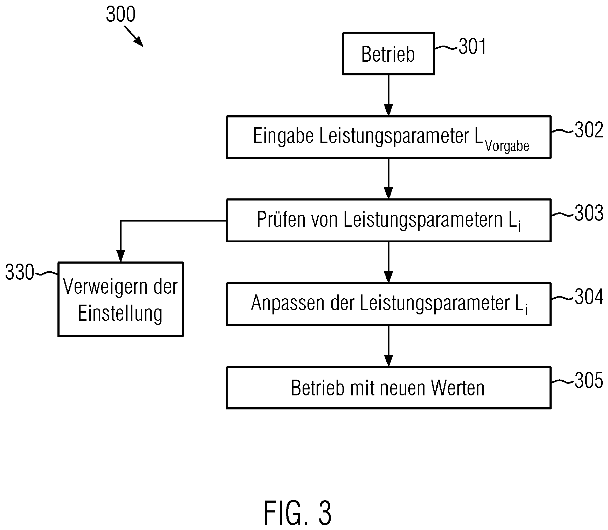

Dazu zeigt Fig. 3 eine mögliche Ausführungsform.

In Fig. 3 erfolgt zunächst der Betrieb der Teigverarbeitungsmaschine im Schritt 301 gemäß den eingestellten Vorgaben. Während des Betriebs kann, muss aber keine Veränderung eines Faktors im Sinne der Fig. 2 erfolgt sein.

Es kann vorgesehen sein, dass eine der Arbeitsstationen der in Fig. 1 beispielhaft dargestellten Teigverarbeitungsmaschine 100 als "Vorgabestation" ausgebildet ist. Diese Vorgabestation zeichnet sich dadurch aus, dass aufgrund des bei ihr veränderten Leistungsparameters die übrigen Leistungsparameter der Teigverarbeitungsmaschine ebenfalls verändert werden.

Im Schritt 302 kann nun vom Bediener mittels der Eingabeeinrichtung eine Eingabe hinsichtlich einer Veränderung des zugehörigen Leistungsparameters $L_{Vorgabe}$ der Vorgabestation erfolgen. Dies kann etwa ein Erhöhen oder Verringern des Leistungsparameters $L_{Vorgabe}$ bewirken.

Da es sich bei der Arbeitsstation um eine Vorgabestation handelt, ist nun notwendig, dass die übrigen Leistungsparameter aller Arbeitsstationen (gegebenenfalls bis auf die Arbeitsstationen, deren Leistungsparameter $\overline{L}$ konstant gehalten werden müssen) geändert werden.

Dies erfolgt bevorzugt so, dass alle betreffenden Leistungsparameter in Transportrichtung vor und/oder nach der Vorgabestation eingestellt werden. Die Einstellung erfolgt jedoch so, dass die betreffenden

$$F_{nm} = \frac{L_n}{L_m}$$

Faktoren konstant gehalten werden. Dies bedeutet etwa, dass für eine Vorgabestation, deren nachgeschaltete Arbeitsstation mit der Vorgabestation über dem Faktor $F_{nm} = 2$ zusammenhängt, bei einer Verdopplung des Leistungsparameters der Vorgabestation auch eine Verdopplung des Leistungsparameters der nachfolgenden Arbeitsstation erforderlich macht, wegen

$$F_{Vorgabe,m} = \frac{L_{Vorgabe}}{L_m}.$$

In einem nächsten Schritt 303 kann nun geprüft werden, ob die notwendige Einstellung der Leistungsparameter $L_i$ zulässig ist. Diese Prüfung kann analog zu den bereits in Fig. 2 beschriebenen Prüfungsschritten erfolgen, nämlich indem geprüft wird, ob der neu einzustellende Leistungsparameter für die betreffende Arbeitsstation immer noch in einem für diesen Leistungsparameter zulässigen Leistungsparameter-Bereich liegt.

Der neue Wert des Leistungsparameters wird dabei analog zur Beschreibung in Fig. 3 ermittelt, indem ausgehend von der Vorgabestation und unter Festhalten der entsprechenden Faktoren die neuen Leistungsparameter passend zu der neuen Vorgabe des Leistungsparameters $L_{Vorgabe}$ bestimmt werden. Für jeden dieser Leistungsparameter wird dann geprüft, ob dieser noch innerhalb des für den Leistungsparameter zulässigen Leistungsparameter-Bereichs liegt.

Wird im Schritt 303 festgestellt, dass dies möglich ist, so werden im Schritt 304 die übrigen Leistungsparameter $L_i$ angepasst und der Betrieb der Teigverarbeitungsmaschine wird im Schritt 305 mit den neuen Leistungsparametern durchgeführt, wobei sämtliche Faktoren $F_{nm}$ unverändert sind, also die relative Einstellung der Arbeitsstationen zueinander unverändert bleibt.

Wird im Schritt 303 jedoch festgestellt, dass ein Einstellen wenigstens eines der Leistungsparameter basierend auf der neuen Eingabe $L_{Vorgabe}$ nicht möglich ist, so kann im Schritt 330 eine Verweigerung der Einstellung erfolgen, die dem Bediener beispielsweise auf dem Display 160 der Eingabeeinrichtung 150 angezeigt wird.

**Patentansprüche**

1. Teigverarbeitungsmaschine (100) zum Bearbeiten von Produkten in der Lebensmittelindustrie, die Teigverarbeitungsmaschine umfassend wenigstens zwei entlang eines Transportweges von Produkten nacheinander angeordnete Arbeitsstationen (101 - 107), wobei der Betrieb der in Transportrichtung ersten Arbeitsstation von einem ersten Leistungsparameter $L_1$ und der Betrieb der in Transportrichtung zweiten Arbeitsstation von einem zweiten Leistungsparameter $L_2$ abhängt, eine Steuereinheit (180), die mit den Arbeitsstationen (101 - 107) zum Einstellen der Leistungsparameter verbunden ist, **gekennzeichnet durch** eine mit der Steuereinheit verbundene Eingabeeinrichtung (150), über die eine Einstellung eines Faktors

$$F = \frac{L_1}{L_2}$$

erfolgen kann, wobei die Steuereinheit ausgebildet ist, die Leistungsparameter der ersten und der zweiten Arbeitsstation abhängig von F einzustellen und alle übrigen Faktoren $F_{nm} = \frac{L_n}{L_m}$ unverändert zu lassen, wobei $L_n$, $L_m$ Leistungsparameter von verschiedenen Arbeitsstationen n, m der Teigverarbeitungsmaschine sind.

2. Teigverarbeitungsmaschine (100) nach Anspruch 1, wobei die Steuereinheit (180) ausgebildet ist, wenigstens einen Leistungsparameter einer in Transportrichtung vor der ersten Arbeitsstation angeordneten Arbeitsstation abhängig von F und $L_1$ einzustellen, nachdem eine Einstellung von F erfolgt ist; und/oder wobei die Steuereinheit (180) ausgebildet ist, wenigstens einen Leistungsparameter einer in Transportrichtung nach der zweiten Arbeitsstation angeordneten Arbeitsstation abhängig von F und $L_2$ einzustellen, nachdem eine Einstellung von F erfolgt ist.

3. Teigverarbeitungsmaschine (100) nach Anspruch 1 oder 2, wobei die Teigverarbeitungsmaschine (100) eine Arbeitsstation umfasst, deren Leistungsparameter $\overline{L}$ unabhängig von den Leistungsparametern der übrigen Arbeitsstationen ist, wobei die Steuereinheit ausgebildet ist, den Leistungsparameter $\overline{L}$ nach einer Einstellung von F konstant zu belassen.

4. Teigverarbeitungsmaschine (100) nach einem der Ansprüche 1 bis 3, wobei weiterhin eine Arbeitsstation (101 - 107) als Vorgabestation ausgebildet ist und wobei die Eingabeeinrichtung (150) zum Einstellen eines Leistungsparameters $L_{Vorgabe}$ ausgebildet ist und die Steuereinheit (180) ausgebildet ist, alle Leistungsparameter aller Arbeitsstationen (101 - 107) abhängig von $L_{Vorgabe}$ einzustellen.

5. Teigverarbeitungsmaschine (100) nach Anspruch 4, wobei die Leistungsparameter aller Arbeitsstationen (101 - 107) abhängig von den Faktoren $F_{nm} = \frac{L_n}{L_m}$ und von $L_{Vorgabe}$ so von der Steuereinheit (180) eingestellt werden können, dass alle $F_{nm}$ konstant bleiben.

6. Teigverarbeitungsmaschine (100) nach einem der Ansprüche 1 bis 5, wobei die Leistungsparameter Transportgeschwindigkeiten sind.

7. Teigverarbeitungsmaschine (100) nach einem der Ansprüche 1 bis 6, wobei wenigstens eine der Arbeitsstationen (101 - 107) eine Transporteinrichtung (101, 103, 105, 107) zum Transportieren von Produkten ist oder diese umfasst und/oder wobei wenigstens eine der Arbeitsstationen (101 -107) eine Bearbeitungsstation (102, 104, 106) zum Bearbeiten von Produkten ist oder diese umfasst.

8. Teigverarbeitungsmaschine (100) nach einem der Ansprüche 1 bis 7, wobei die Steuereinheit (180) ausgebildet ist, eine Einstellung eines Faktors basierend auf einem zulässigen Leistungsparameter-Bereich zu prüfen und abhängig von einem Ergebnis der Prüfung die Einstellung des Faktors vorzunehmen oder zu verweigern.

9. Verfahren (200) zum Steuern des Betriebs einer Teigverarbeitungsmaschine (100) zum Bearbeiten von Produkten in der Lebensmittelindustrie, die Teigverarbeitungsmaschine (100) umfassend wenigstens zwei entlang eines Transportweges von Produkten nacheinander angeordnete Arbeitsstationen (101 - 107), wobei der Betrieb der in Transportrichtung ersten Arbeitsstation von einem ersten Leistungsparameter $L_1$ und der Betrieb der in Transportrichtung zweiten Arbeitsstation von einem zweiten Leistungsparameter $L_2$ abhängt, eine Steuereinheit (180), die mit den Arbeitsstationen (101 - 107) zum Einstellen der Leistungsparameter verbunden ist, **gekennzeichnet durch** eine mit der Steuereinheit verbundene Eingabeeinrichtung (150), das Verfahren umfassend eine Einstellung (202) des Faktors $F = \frac{L_1}{L_2}$ mittels der Eingabeeinrichtung (150) und ein Einstellen der Leistungsparameter der ersten und der zweiten Arbeitsstation abhängig von der Einstellung von F durch die Steuereinheit (180), wobei die Steuereinheit alle übrigen Faktoren $F_{nm} = \frac{L_n}{L_m}$ unverändert lässt, wobei $L_n$, $L_m$ Leistungsparameter von verschiedenen Arbeitsstationen n, m der Teigverarbeitungsmaschine sind.

10. Verfahren (200) nach Anspruch 9, wobei die Steuereinheit (180) wenigstens einen Leistungsparameter einer in Transportrichtung vor der ersten Arbeitsstation angeordneten Arbeitsstation abhängig von F und $L_1$ einstellt, nachdem eine Einstellung von F erfolgt ist; und/oder wobei die Steuereinheit (180) wenigstens einen Leistungsparameter einer in Transportrichtung nach der zweiten Arbeitsstation angeordneten Arbeitsstation abhängig von F und $L_2$ einstellt, nachdem eine Einstellung von F erfolgt ist.

11. Verfahren (200) nach Anspruch 9 oder 10, wobei die Teigverarbeitungsmaschine eine Arbeitsstation umfasst, deren Leistungsparameter $\overline{L}$ unabhängig von den Leistungsparametern der übrigen Arbeitsstationen (101 - 107) ist, wobei die Steuereinheit den Leistungsparameter $\overline{L}$ nach einer Einstellung von F konstant lässt.

12. Verfahren (200) nach einem der Ansprüche 9 bis 11, wobei weiterhin eine Arbeitsstation als Vorgabestation ausgebildet ist und wobei die Eingabeeinrichtung (150) eine Eingabe (302) zur Einstellung eines Leistungsparameters $L_{Vorgabe}$ empfängt und die Steuereinheit (180) alle Leistungsparameter aller Arbeitsstationen (101 - 107) abhängig von $L_{Vorgabe}$ einstellt (304).

13. Verfahren (200) nach Anspruch 12, wobei die Leistungsparameter aller Arbeitsstationen (101 - 107) abhängig von den Faktoren $F_{nm} = \frac{L_n}{L_m}$ und von $L_{Vorgabe}$ so von der Steuereinheit (180) eingestellt werden, dass alle Faktoren $F_{nm}$ konstant bleiben.

**14.** Verfahren (200) nach einem der Ansprüche 9 bis 13, wobei die Leistungsparameter Transportgeschwindigkeiten sind.

**15.** Verfahren (200) nach einem der Ansprüche 9 bis 14, wobei die Steuereinheit (180) eine Einstellung eines Faktors basierend auf einem zulässigen Leistungsparameter-Bereich prüft (203, 212, 222) und abhängig von einem Ergebnis der Prüfung die Einstellung des Faktors vornimmt oder verweigert.

**Claims**

**1.** Dough processing machine (100) for treating products in the food industry, said dough processing machine comprising at least two workstations (101 - 107) arranged successively along a transport path of products, where the operation of the workstation, in the direction of transport being the first one, depends on a first performance parameter $L_1$, and the operation of the workstation, in the direction of transport being the second one, depends on a second performance parameter $L_2$, a control unit (180) which is connected to said workstations (101 - 107) for adjusting the performance parameters, **characterized by** an input device (150) connected to said control unit via which a factor $F = \frac{L_1}{L_2}$ can be adjusted, where said control unit is configured to adjust the performance parameters of said first and said second workstation as a function of F and to leave all other factors $F_{nm} = \frac{L_n}{L_m}$ unchanged, where $L_n$, $L_m$ are performance parameters of different workstations n, m of the dough processing machine.

**2.** Dough processing machine (100) according to claim 1, where said control unit (180) is configured to adjust at least one performance parameter of a workstation, that is arranged in said direction of transport upstream of said first workstation, as a function of F and $L_1$ once F has been adjusted; and/or where said control (180) unit is configured to adjust at least one performance parameter of a workstation, that is arranged in the direction of transport downstream of said second workstation, as a function of F and $L_2$ once F has been adjusted.

**3.** Dough processing machine (100) according to claim 1 or 2, where said dough processing machine (100) comprises a workstation, the performance parameter L of which is independent of the performance parameters of said other workstations, where said control unit is configured to keep the performance parameter $\bar{L}$ constant once F has been adjusted.

**4.** Dough processing machine (100) according to one of the claims 1 to 3, where a workstation (101-107) is further configured as a default station and where said input device (150) is configured to adjust a performance parameter $L_{default}$ and said control unit (180) is configured to adjust all performance parameters of all workstations (101 - 107) as a function of $L_{default}$.

**5.** Dough processing machine (100) according to claim 4, where the performance parameters of all workstations (101-107) can be adjusted by the control unit (180) as a function of factors $F_{nm} = \frac{L_n}{L_m}$ and of $L_{default}$ in such a way that all $F_{nm}$ remain constant.

**6.** Dough processing machine (100) according to one of the claims 1 to 5, where the performance parameters are transport speeds.

**7.** Dough processing machine (100) according to one of the claims 1 to 6, where at least one of said workstations (101 - 107) is or comprises a transport device (101, 103, 105, 107) for transporting products and/or where at least one of said workstations (101 - 107) is or comprises a treatment station (102, 104, 106) for treating products.

**8.** Dough processing machine (100) according to one of the claims 1 to 7, where said control unit is configured to verify an adjustment of a factor based on a permissible performance parameter range and to carry out or refuse the adjustment of the factor in dependence of an outcome of the verification.

**9.** Method (200) for controlling the operation of a dough processing machine (100) for treating products in the food industry, said dough processing machine (100) comprising at least two workstations (101 - 107) arranged consecutively along a transport path of products, where the operation of the workstation, in the direction of transport being the first one, depends on a first performance parameter $L_1$, and the operation of the workstation, in the direction of transport being the second one, depends on a second performance parameter $L_2$, a control unit (180) which is connected to said workstations (101 - 107) for adjusting the performance parameters, **characterized by** an input device (150) connected to said control unit, said method comprising the adjustment of the factor $F = \frac{L_1}{L_2}$ by way of said input device (150) and the adjustment of the performance parameters of said first and said second workstation as a function of the adjustment of L by said control unit (180), where said control unit leaves all other factors

$F_{nm} = \dfrac{L_n}{L_m}$ unchanged, where $L_n$, $L_m$ are performance parameters of different workstations n, m of the dough processing machine.

10. Method (200) according to claim 9, where said control unit (180) adjusts at least one performance parameter of a workstation that is arranged in said direction of transport upstream of said first workstation as a function of F and $L_1$ once F has been adjusted; and/or
where said control (180) unit adjusts at least one performance parameter of a workstation that is arranged in said direction of transport downstream of said second workstation as a function of F and $L_2$ once F has been adjusted.

11. Method (200) according to claim 9 or 10, where said dough processing machine comprises a workstation, the performance parameter $\overline{L}$ of which is independent of the performance parameters of said other workstations (101 - 107), where said control unit is configured to keep the performance parameter $\overline{L}$ constant once F has been adjusted.

12. Method (100) according to one of the claims 9 to 11 where furthermore a workstation is configured as a default station and where said the input device (150) is configured to receive an input (302) for the adjustment of a performance parameter $L_{default}$ and said control unit (180) adjusts all performance parameters of all workstations (101 - 107) as a function of $L_{default}$ (304).

13. Method (200) according to claim 12, where the performance parameters of all workstations (101-107) are adjusted by said control unit (180) as a function of factors $F_{nm} = \dfrac{L_n}{L_m}$ and $L_{default}$ in such a way that all factors $F_{nm}$ remain constant.

14. Method (200) according to one of the claims 9 to 13, where the performance parameters are transport speeds.

15. Method (200) according to one of the claims 9 to 14, where said control unit (180) is configured to verify a setting of a factor based on a permissible performance parameter range (203, 212, 222) and to carry out or refuse the adjustment of the factor in dependence of an outcome of the verification.

**Revendications**

1. Machine de transformation de pâte (100) permettant de façonner des produits dans l'industrie alimentaire, la machine de transformation de pâte comprenant au moins deux postes de travail (101 à 107) agencés l'un après l'autre le long d'un trajet de transport des produits, dans laquelle le fonctionnement du poste de travail qui est le premier dans la direction de transport dépend d'un premier paramètre de performance $L_1$ et le fonctionnement du poste de travail qui est le second dans la direction de transport dépend d'un second paramètre de performance $L_2$, et une unité de commande (180) reliée aux postes de travail (101 à 107) afin d'ajuster les paramètres de performance, **caractérisée par** un dispositif d'entrée (150) relié à l'unité de commande et par l'intermédiaire duquel peut être mis en oeuvre un ajustement d'un facteur $F = \dfrac{L_1}{L_2}$, dans laquelle l'unité de commande est conçue pour ajuster les paramètres de performance des premier et second postes de travail en fonction de F et pour laisser inchangés tous les autres facteurs $Fnm = \dfrac{L_n}{L_m}$, dans laquelle $L_n$, $L_m$ sont des paramètres de performance de différents postes de travail n, m de la machine de transformation de pâte.

2. Machine de transformation de pâte (100) selon la revendication 1, dans laquelle l'unité de commande (180) est conçue pour, après qu'un ajustement de F a été mis en oeuvre, ajuster en fonction de F et $L_1$ au moins un paramètre de performance d'un poste de travail agencé avant le premier poste de travail dans la direction de transport ; et/ou
dans lequel l'unité de commande (180) est conçue pour, après qu'un ajustement de F a été mis en oeuvre, ajuster en fonction de F et $L_2$ au moins un paramètre de performance d'un poste de travail agencé après le second poste de travail dans la direction de transport.

3. Machine de transformation de pâte (100) selon la revendication 1 ou 2, dans laquelle la machine de transformation de pâte (100) comprend un poste de travail dont le paramètre de performance $\overline{L}$ est indépendant des paramètres de performance des autres postes de travail, dans laquelle l'unité de commande est conçue pour maintenir le paramètre de performance $\overline{L}$ constant après un ajustement de F.

4. Machine de transformation de pâte (100) selon l'une quelconque des revendications 1 à 3, dans laquelle un poste de travail (101 à 107) fait en outre office de poste de référence et dans laquelle le dispositif d'entrée (150) est conçu pour ajuster un paramètre de performance $L_{Vorgabe}$ et l'unité de commande (180) est conçue pour ajuster tous les paramètres de performance de tous les postes de travail (101 à 107) en fonction de $L_{Vorgabe}$.

**5.** Machine de transformation de pâte (100) selon la revendication 4, dans laquelle les paramètres de performance de tous les postes de travail (101 à 107) peuvent être ajustés par l'unité de commande (180)

$$Fnm = \frac{L_n}{L_m}$$

en fonction des facteurs et de $L_{Vorgabe}$ de sorte que tous les $F_{nm}$ restent constants.

**6.** Machine de transformation de pâte (100) selon l'une quelconque des revendications 1 à 5, dans laquelle les paramètres de performance sont des vitesses de transport.

**7.** Machine de transformation de pâte (100) selon l'une quelconque des revendications 1 à 6, dans laquelle au moins un des postes de travail (101 à 107) est ou comprend un dispositif de transport (101, 103, 105, 107) permettant de transporter des produits et/ou dans laquelle au moins un des postes de travail (101 à 107) est ou comprend un poste de façonnage (102, 104, 106) permettant de façonner des produits.

**8.** Machine de transformation de pâte (100) selon l'une quelconque des revendications 1 à 7, dans laquelle l'unité de commande (180) est conçue pour vérifier un ajustement d'un facteur en se basant sur une plage de paramètres de performance autorisée et pour mettre en oeuvre ou refuser l'ajustement du facteur en fonction d'un résultat de la vérification.

**9.** Procédé (200) de commande du fonctionnement d'une machine de transformation de pâte (100) permettant de façonner des produits dans l'industrie alimentaire, la machine de transformation de pâte (100) comprenant au moins deux postes de travail (101 à 107) agencés l'un après l'autre le long d'un trajet de transport de produits, dans lequel le fonctionnement du poste de travail qui est le premier dans la direction de transport dépend d'un premier paramètre de performance $L_1$ et le fonctionnement du poste de travail qui est le second dans la direction de transport dépend d'un second paramètre de performance $L_2$, et une unité de commande (180) reliée aux postes de travail (101 à 107) afin d'ajuster les paramètres de performance, **caractérisé par** un dispositif d'entrée (150) relié à l'unité de commande, le procédé comprenant un ajustement (202) du facteur

$$F = \frac{L_1}{L_2}$$

au moyen du dispositif d'entrée (150) et un ajustement des paramètres de performance des premier et second postes de travail en fonction de l'ajustement de F par l'unité de commande (180), dans lequel l'unité de commande laisse inchangés

$$Fnm = \frac{L_n}{L_m}$$

tous les autres facteurs , dans lequel $L_n$, $L_m$ sont des paramètres de performance de différents postes de travail n, m de la machine de transformation de pâte.

**10.** Procédé (200) selon la revendication 9, dans lequel l'unité de commande (180), après qu'un ajustement de F a été mis en oeuvre, ajuste en fonction de F et $L_1$ au moins un paramètre de performance d'un poste de travail agencé avant le premier poste de travail dans la direction de transport ; et/ou dans lequel l'unité de commande (180), après qu'un ajustement de F a été mis en oeuvre, ajuste en fonction de F et $L_2$ au moins un paramètre de performance d'un poste de travail agencé après le second poste de travail dans la direction de transport.

**11.** Procédé (200) selon la revendication 9 ou 10, dans lequel la machine de transformation de pâte comprend un poste de travail dont les paramètres de performance $\overline{L}$ sont indépendants des paramètres de performance des autres postes de travail (101 à 107), dans lequel l'unité de commande laisse le paramètre de performance $\overline{L}$ constant après un ajustement de F.

**12.** Procédé (200) selon l'une quelconque des revendications 9 à 11, dans lequel un poste de travail fait en outre office de poste de référence et dans lequel le dispositif d'entrée (150) reçoit une entrée (302) afin d'ajuster un paramètre de performance $L_{Vorgabe}$ et l'unité de commande (180) ajuste (304) tous les paramètres de performance de tous les postes de travail (101 à 107) en fonction de $L_{Vorgabe}$.

**13.** Procédé (200) selon la revendication 12, dans lequel les paramètres de performance de tous les postes de travail (101 à 107) sont ajustés par l'unité de commande (180) en fonction des facteurs

$$Fnm = \frac{L_n}{L_m}$$

et de $L_{Vorgabe}$ de sorte que tous les facteurs $F_{nm}$ restent constants.

**14.** Procédé (200) selon l'une quelconque des revendications 9 à 13, dans lequel les paramètres de performances sont des vitesses de transport.

**15.** Procédé (200) selon l'une quelconque des revendications 9 à 14, dans lequel l'unité de commande (180) vérifie (203, 212, 222) un ajustement d'un facteur en se basant sur une plage de paramètres de performance autorisée et met en oeuvre ou refuse l'ajustement du facteur en fonction d'un résultat de la vérification.

FIG. 1

EP 3 985 459 B1

200

Betrieb — 201

Eingabe Faktor $F_{ij} = \dfrac{L_i}{L_j}$ — 202

Prüfen der Leistungsparameter $L_i$, $L_j$ — 203

| | |
|---|---|
| Veränderung $L_i$ — 211 | Veränderung $L_j$ — 221 |
| Prüfen $L_{m<i}$ — 212 | Prüfen $L_{m>j}$ — 222 |
| Anpassen $L_{m<i}$ — 213 | Anpassen $L_{m>j}$ — 223 |

Betrieb mit neuen Leistungsparametern — 204

FIG. 2

300

Betrieb ～301

Eingabe Leistungsparameter $L_{Vorgabe}$ ～302

Prüfen von Leistungsparametern $L_i$ ～303

330～ Verweigern der Einstellung

Anpassen der Leistungsparameter $L_i$ ～304

Betrieb mit neuen Werten ～305

FIG. 3

**IN DER BESCHREIBUNG AUFGEFÜHRTE DOKUMENTE**

**In der Beschreibung aufgeführte Patentdokumente**

- DE 102009017638
- DE 102004038088